(19) Europäisches Patentamt
European Patent Office
Office européen des brevets

(11) **EP 3 190 153 B1**

(12) **EUROPEAN PATENT SPECIFICATION**

(45) Date of publication and mention
of the grant of the patent:
**30.01.2019 Bulletin 2019/05**

(21) Application number: **15837908.1**

(22) Date of filing: **31.08.2015**

(51) Int Cl.:
*C08L 59/02* (2006.01)    *C08K 3/08* (2006.01)
*C08K 3/30* (2006.01)    *C08K 5/13* (2006.01)
*C08L 59/04* (2006.01)    *C08K 5/00* (2006.01)
*C08L 23/02* (2006.01)    *C08L 23/08* (2006.01)
*C08L 51/06* (2006.01)    *C08L 83/04* (2006.01)

(86) International application number:
**PCT/KR2015/009126**

(87) International publication number:
**WO 2016/036086 (10.03.2016 Gazette 2016/10)**

(54) **ACETAL RESIN COMPOSITION**

ACETALHARZZUSAMMENSETZUNG

COMPOSITION DE RÉSINE D'ACÉTAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.09.2014 KR 20140118968**

(43) Date of publication of application:
**12.07.2017 Bulletin 2017/28**

(73) Proprietor: **Korea Engineering Plastics Co., Ltd. Seoul 04144 (KR)**

(72) Inventors:
• **PARK, Seung Chin**
  **Seoul 06292 (KR)**
• **BYUN, Gyung Seob**
  **Seongnam-si**
  **Gyeonggi-do 13608 (KR)**

• **LEE, Ji Young**
  **Gunpo-si**
  **Gyeonggi-do 15823 (KR)**

(74) Representative: **Bassil, Nicholas Charles et al Kilburn & Strode LLP Lacon London 84 Theobalds Road London WC1X 8NL (GB)**

(56) References cited:
EP-A1- 2 098 569        KR-A- 20030 070 437
KR-A- 20070 050 453    KR-A- 20130 077 235
KR-U- 20130 007 177    US-A1- 2005 119 384
US-B1- 6 177 113        US-B1- 6 177 113

**Description**

**Technical Field**

The present invention relates to an acetal resin composition.

**Background Art**

Food or medicine is mostly exposed to plastic in processes such as a manufacturing process, a package process, a transferring process, and the like. For example, food or medicine may be contaminated from a plastic component or a fragment of the plastic component in a manufacturing process line, and sometimes, a product contaminated by plastic, or the like, is discovered. This causes recall cost of the product, court cost, deterioration of product reliability, and it takes a long time and large cost to recover consumer confidence.

Since it is impossible to detect plastic capable of contaminating food using a detector such as a metal detector, an X-ray detector, or the like, it was a long task to find a solution for a plastic contamination problem.

Therefore, research into a detection additive for confirming whether to detect plastic contamination before a final product reaches a consumer, while maintaining safety and quality of food has been conducted.

U.S. Patent Application Publication No. 6,113,482 (Patent Document 1) discloses a method of adding stainless steel, or the like, to a plastic film wrap as a filler so that a fraction may be detected in food. In this method, a metal may be detected using a metal detector, but there is a limitation in that the film should be manufactured to be large so that the film may contain a metal material equivalent thereto. In addition, it is difficult to commercially manufacture the film due to a particle size of stainless steel, an irregular particle shape, wear characteristics of the particle, and the like.

U.S. Patent Application Publication No. 6,177,113 (Patent Document 2) discloses a method of increasing a ratio of particles to increase a detection rate, but in this method, there are problems in that metal particles are expensive, and a contamination risk due to stainless steel particles may be increased.

As described above, in a film containing metal particles, plastic contamination of food may be detected using a detector, but there are problems in that there is a need to adjust a size, a shape, or the like, of the metal particle or increase a content thereof, and a contamination risk may be further increased or plastic contamination may not be detected due to a loss of the contained metal particles.

**Disclosure**

**Technical Problem**

An object of the present invention is to provide an acetal resin composition capable of preventing plastic contamination of food or medicine and allowing detectable metal particles to be contained in plastic to thereby allow the plastic to be preemptively detected and separated using a detector.

Another object of the present invention is to provide an acetal resin composition capable of increasing adhesion between an acetal resin corresponding to a matrix resin and the metal particles and significantly decreasing a content loss of the metal particles at the time of production to improve productivity and economical efficiency, and capable of significantly increasing dispersibility of the metal particles to thereby be easily detected by a detector even in the case in which the acetal resin composition contains a small amount of metal particles.

Another object of the present invention is to provide an acetal resin composition capable of decreasing friction heat generated between the acetal resin and the metal particles to decrease an emission amount of harmful materials, having improved friction wear resistance to prevent the metal particles from being lost by wear at the time of using or driving, and decreasing a contamination risk of food or medicine due to separated metal particles, and a preparation method thereof.

**Technical Solution**

In one general aspect, an acetal resin composition contains: (a) polyoxymethylene; (b) metal particles; and (c) at least one dispersion improvers selected from polyolefin based compounds and silicon based compounds.

The acetal resin composition may contain 70 to 99 wt% of the polyoxymethylene (a), 0.5 to 20 wt% of the metal particles (b), and 0.05 to 10 wt% of at least one dispersion improvers (c) selected from the polyolefin based compounds and the silicon based compounds.

The polyolefin based compound may include maleic anhydride-modified polyolefin based resins in which maleic anhydride is grafted onto at least one polyolefin based resins selected from a polyolefin elastomer, ethylene vinyl acetate, ethylene alkyl acrylate, linear low-density polyethylene, and high-density polyethylene.

The maleic anhydride may be contained in a content of 0.1 to 10 wt% based on a total weight of the maleic anhydride-modified polyolefin based resin.

The silicon based compound may be any one selected from siloxane compounds, silane compounds, and a mixture thereof.

The metal particles may have an average diameter of 0.1 to 10,000 μm.

The acetal resin composition may further contain barium sulfate.

The acetal resin composition may further contain a sterically hindered phenolic compound.

The acetal resin composition may further contain any one or more additives selected from the group consisting of an antioxidant, a formaldehyde or formic acid removing agent, a thermal stabilizer, a lubricant, an impact modifier, an antibiotic, a processing aid, a filler, a colorant, a release agent, an antistatic agent, a flame retardant, a reinforcing agent, a photostabilizer, a pigment, an anti-friction agent, and an anti-wear agent.

In another general aspect, a molded product contains the acetal resin composition described above.

**Advantageous Effects**

An acetal resin composition according to the present invention may increase adhesion between an acetal resin corresponding to a matrix resin and metal particles and significantly improve dispersibility of the metal particles, such that even though the acetal resin composition contains a small amount of the metal particles, the acetal resin may be easily detected by a detector. That is, since the metal particles may be uniformly dispersed, even though a size of a plastic fragment is significantly small, a case in which this plastic fragment is not detected by a detector may be significantly decreased.

Further, the acetal resin composition according to the present invention may significantly decrease a content loss of the metal particles at the time of compounding, thereby making it possible to improve productivity and economical efficiency. Since a difference in specific gravity between the metal particles and the acetal resin corresponding to the matrix resin is large, and adhesion therebetween is significantly low, at the time of compounding, loss of the metal particles may occur. However, according to the present invention, it is possible to prevent deterioration of fixed amount injection stability. That is, the acetal resin composition according to the present invention has an advantage in that before a compounding process, a mixing degree of the metal particles and the acetal resin is high, and at the time of putting the acetal resin and the metal particles in a compounding process, dispersibility may be significantly increased, thereby making it possible to minimize a retention rate of the metal particles in equipment to decrease loss of the metal particles.

Further, the acetal resin composition according to the present invention has excellent thermal characteristics, such that the acetal resin composition may significantly decrease emission of organic volatile material, and improve processing characteristics and surface characteristics. That is, the acetal resin composition may minimize decomposition of the acetal resin which is sensitive to heat by applying a dispersion improver to decrease extruder torque and friction heat which may be generated between the acetal resin and the metal particles at the time of processing.

Further, since the acetal resin composition according to the present invention has excellent friction wear resistance, at the time of applying and using the acetal resin composition in a product, the acetal resin composition may prevent metal particle contamination due to fragments caused by wear, such that the acetal resin composition may be safely applied to products affecting a human body, and the like, in addition to food and medicine, and the acetal resin composition may be widely used in various industrial fields.

**Best Mode**

Hereinafter, an acetal resin composition according to the present invention will be described in detail. The exemplary embodiments of the present invention to be described below are provided by way of example so that the idea of the present invention can be sufficiently transferred to those skilled in the art to which the present invention pertains. In addition, technical terms and scientific terms used in the present specification have the general meaning understood by those skilled in the art to which the present invention pertains unless otherwise defined, and a description for the known function and configuration obscuring the present invention will be omitted in the following description.

The acetal resin composition according to the present invention may contain (a) polyoxymethylene, (b) metal particles, and (c) at least one dispersion improvers selected from polyolefin based compounds and silicon based compounds.

Hereinafter, each of the ingredients will be described in more detail.

(a) Acetal Resin

In the present invention, an acetal resin (POM or polyoxymethylene) is a polymer having oxymethylene repeating unit, and may be a homopolymer having the oxymethylene repeating unit, an oxymethylene-oxyalkylene copolymer, or a mixture thereof.

The homopolymer may be prepared by polymerizing formaldehyde or a cyclic oligomer thereof, for example, trioxane, and the copolymer may be prepared by polymerizing formaldehyde or a cyclic oligomer thereof with alkylene oxide or cyclic formal, for example, 1,3-dioxolane, diethylene glycol formal, 1,4-propanediol formal, 1,4-butanediol formal, 1,3-dioxepane formal, 1,3,6-trioxocane, or the like.

It is preferable to use one or two or more selected from monomers such as ethylene oxide, 1,3-dioxolane, 1,4-butandiol formal, and the like, and an oxymethylene copolymer having a melting point of 150°C or more and having two or more combined carbon atoms in a main chain may be prepared by adding these monomers to trioxane or formaldehyde, which is a main monomer, and randomly copolymerizing these monomers using Lewis acid as a catalyst. In the case of using the copolymer, an amount of a comonomer may be 20 wt% or less, preferably 15 wt% or less, and most preferably, 4 to 5 wt%.

The homopolymer or copolymer may be stabilized by capping terminal groups thereof through esterification or etherification.

The polyoxymethylene used in the composition according to the present invention may be a branched type or a linear type, and a polyoxymethylene homopolymer or oxymethylene-oxyethylene copolymer having a melting point of about 160°C or more, a crystallinity of 65 to 85 %, and a weight average molecular weight of 10,000 to 200,000 g/mole, preferably, 20,000 to 90,000 g/mole, and more preferably, 25,000 to 70,000 g/mole may be used. The weight average molecular weight may be measured by gel-permeation chromatography in m-cresol using a DuPont PSM bimodal column kit having a nominal pore size of 60 to 1000 Å.

The acetal resin may have a melt flow index in a range of 0.1 to 100 g/10 min, preferably, 0.5 to 60 g/10 min, and more preferably, 0.8 to 40 g/10 min, for injection molding. In the present specification, the melt flow index is measured at 190°C/2.16kg according to ISO 1133 standard. The range of the melt flow index may be adjusted depending on other structures and processes such as a film, fiber, and blow molding.

As a commercial example of the polyoxymethylene, there is KEPITAL produced by Korean Engineering Plastics Co., Ltd. As a specific product name, KEPITAL F10-01, F10-02, F10-03H, F15-33, F20-03, F25-03, F25-03H, F30-03, F40-03, or the like, may be used, but the polyoxymethylene is not limited thereto.

The polyoxymethylene according to the present invention may be used in a content of 70 to 99 wt%, preferably, 80 to 99 wt%, and more preferably, 85 to 95 wt% based on a total weight of the composition. When the content of the polyoxymethylene is less than 70 wt%, thermal stability and mechanical properties may be deteriorated, and when the content of the polyoxymethylene is more than 99 wt%, detection performance of the metal particles may be deteriorated.

(B) Metal Particles

In the present invention, the metal particles are ingredients capable of being detected by a detector, and generally, iron, copper, nickel, cobalt, molybdenum, an alloy thereof, or the like, may be used. However, any metal particles may be used without limitation as long as they may be detected. Preferably, stainless steel that is hardly affected by external factors such as moisture, and the like, may be used, but the metal particles are not limited thereto, but may be changed depending on an application field.

The metal particles may be in a powder form in order to increase adhesion with the acetal resin, which is a matrix resin, and improve detection performance. The powder-form metal particles may improve dispersibility in the resin composition and increase adhesion with the acetal resin, which is the matrix resin. Further, the metal particles may have an average particle diameter of 0.1 to 10,000 $\mu$m, preferably, 5 to 8,000 $\mu$m. The average particle diameter of the metal particles is more than 10,000 $\mu$m, which is disadvantageous in dispersion and deteriorates physical properties, and a degree of dispersion is not uniform as compared to metal particles having a small particle diameter when the content of the metal particles are the same as each other, such that detection may be missed. In addition, when the average particle diameter of the metal particles is less than 0.1 $\mu$m, a working environment may not be good, and cost may be increased.

The metal particles according to the exemplary embodiment of the present invention may be used in an amount of 0.5 to 20 wt%, preferably, 1 to 15 wt%, and more preferably, 5 to 10 wt% based on the total weight of the resin composition. When the content is less than 0.5 wt%, a detection signal of the metal particles may be weakened, and thus, at the time of using a low-sensitivity detector, or using a detector in a highly interfered environment, detection of the metal particles may be missed. Further, when the content is more than 20 wt%, mechanical properties, processability, moldability, or thermal stability may be deteriorated, and a loss rate may be increased, which may cause an increase in cost.

(c) Dispersion Improver

In the present invention, the dispersion improver may significantly decrease a content loss of the metal particles in a manufacturing process by increasing adhesion between the acetal resin, which is the matrix resin, and the metal particles by a combination with other ingredients, thereby making it possible to improve productivity and economical efficiency. Further, the dispersion improver may significantly improve dispersibility of the metal particles, thereby making it possible to provide an acetal resin composition capable of being easily detected by the detector even though the acetal resin composition contains a small amount of the metal ingredient.

In addition, the dispersion improver may significantly decrease an emission amount of organic volatile materials, for example, formaldehyde by decreasing friction heat generated between the acetal resin and the metal particles, prevent a loss of the metal particles due to wear at the time of using or driving a product by improving friction wear resistance, and decrease a contamination risk in food or medicine due to the separated metal particles.

In the present invention, the dispersion improver may include at least one selected from the polyolefin based compounds and the silicon based compounds.

As the polyolefin based compound, at least one polyolefin based resins selected from a polyolefin elastomer, ethylene vinyl acetate, ethylene alkyl acrylate, linear low-density polyethylene, and high-density polyethylene may be used. Preferably, a maleic anhydride-modified polyolefin based resin may be used. As the maleic anhydride-modified polyolefin based resin, more preferably, a maleic anhydride-modified polyolefin based elastomer may be used.

In the polyolefin based compound, a content of maleic anhydride may be 0.1 to 10 wt%, preferably, 0.5 to 5 wt% based on a total weight of the maleic anhydride-modified polyolefin based resin. When the content is less than 0.1 wt%, interfacial bond strength between the metal particles and the matrix resin may be deteriorated, and when the content is more than 10 wt%, physical properties of the resin may be deteriorated.

The silicon based compound may be any one or more selected from siloxane compounds, silane compounds, and mixtures thereof. The compound or the mixture may increase adhesion with the metal particles.

The siloxane compound may have a number average molecular weight of 100 to 10,000, and within the above-mentioned range, dispersibility and adhesion of the metal particles in the resin may be improved. Examples of the siloxane compound may include dimethylpolysiloxane, diethylpolysiloxane, acrylate dimethylpolysiloxane, and the like.

The silane compound includes a hydrolyzable silane residue and a polymeric residue except for the silane residue, and as the silane compound, methyltrimethoxysilane, dimethylmethoxysilane, 3-aminopropyltriethoxysilane, 3-aminopropyldiethoxymethylsilane, 3-aminopropyltrimethoxysilane, vinyltris($\beta$-methoxy)silane, vinyltris(2-methoxyethoxy)silane, N-(2-aminoethyl)-3-amionopropyltrimethoxysilane, and the like, silicon substituted with an alkoxy functional group, or the like, may be used.

The dispersion improver according to the exemplary embodiment of the present invention may be used in a content of 0.05 to 10 wt%, preferably, 0.1 to 3 wt% based on the total weight of the resin composition. When the content of the dispersion improver is less than 0.05 wt%, an effect of improving dispersibility and interfacial bond strength between the matrix resin and the metal particles may be insufficient, and friction wear resistance and thermal stability may be deteriorated. Further, when the content was more than 10 wt%, mechanical properties and moldability may be deteriorated.

(d) Stabilizer

The acetal resin composition according to the present invention may further contain a sterically hindered phenolic compound as a stabilizer. The stabilizer may significantly decrease emission of organic volatile material by a combination with other ingredients, increase thermal stability, surface characteristics, and moldability, and exhibit a synergic effect on characteristics caused by using the metal particles and the dispersion improver.

Examples of the sterically hindered phenolic compound may include triethylene glycol bis[3-(3-t-butyl-5-methyl-4-hydroxyphenyl)propionate], pentaerithrityl-tetrakis[3-(3,5-di-t-butyl-4-hydroxyphenyl)propionate], 2,2-dio-diethylenebis[3-(3,5-di-t-butyl-4-hydroxyphenyl)propionate], N,N'-hexamethylene bis(3,5-di-t-butyl-hydroxy amide), 1,3,5-trimethyl-2,4,6-tris(3,5-di-t-butyl-4-hydroxybenzyl)benzene, 1,6-hexanediol-bis[3-(3,5-di-t-butyl-4-hydroxyphenyl)propionate], 2,4-bis-(n-octylthio)-6-(4-hydroxy-3,5-di-t-butylanilino)-1,3,5-triazine, octadecyl-3-(3,5-di-t-butyl-4-hydroxyphenyl)propionate, 2,2-thiobis(4-methyl-6-t-butylphenol), 3,5-di-t-butyl-4-hydroxybenzylphosphonatediethylester, 1,3,5-tris(4-t-butyl-3-hydroxy-2,6-dimethylbenzyl)isocyanuric acid, 1,1,3-tris(2-methyl-4-hydroxy-5-t-butylphenyl)butane, 1,1-bis(2-methyl-4-hydroxy-5-t-butylphenyl)butane, 2,2'-methylenebis(4-methyl-6-t-butylphenol), N,N'-bis[3-(3,5-di-t-butyl-4-hydroxyphenyl)propionyl]hydrazine, and the like, but are not limited thereto.

The stabilizer may be used in a content of 0.01 to 10 parts by weight, preferably, 0.05 to 5 parts by weight, and more preferably, 0.1 to 2 parts by weight based on 100 parts by weight of the entire composition. Within the above-mentioned range, thermal stability and moldability of the resin composition may be improved, and detectability of the metal particles may be improved by a combination with other ingredients, and emission of the organic volatile materials may be suppressed.

(E) Additive

According to the present invention, if necessary, the acetal resin composition may further include an additive generally used in the art. As a specific example, the acetal resin composition may contain an antioxidant, a formaldehyde or formic acid removing agent, a thermal stabilizer, a lubricant, an impact modifier, an antibiotic, a processing aid, a filler, a colorant, a release agent, an antistatic agent, a flame retardant, a reinforcing agent, a photostabilizer, a pigment, an anti-friction agent, an anti-wear agent, and the like. As an example, a thermal stabilizer such as hydrazide based compound or urea based compound may significantly decrease emission of the organic volatile materials such as formaldehyde, or the like, such that the acetal resin composition may further include the thermal stabilizer.

The acetal resin composition according to the present invention may further contain a thermal stabilizer selected from the group consisting of nitrogen-containing compounds and formic acid scavengers, the nitrogen-containing compound being selected from the group consisting of amino-substituted triazine compounds, condensates thereof with formaldehyde, amide compounds, urea and derivatives thereof, imidazole compound, imide compounds, polyamide compound, and hydrazide compounds.

Examples of the amino-substituted triazine compounds or the condensates thereof with formaldehyde may include melamine, N-butyl melamine, N-phenyl melamine, N, N-diphenyl melamine, N, N-diallyl melamine, N, N', N"-triphenyl melamine, N, N', N"-trimethylol melamine, benzoguanamine, 2,4-diamino-6-methyl-sym-triazine, 2,4-diamino-6-butyl-sym-triazine, 2,4-diamino-6-benzyloxy-sym-triazine, 2,4-diamino-6-butoxy-sym-triazine, 2,4-diamino-6-cyclohexyl-sym-triazine, 2,4-diamino-6-chloro-sym-triazine, 2,4-diamino-6-mercapto-sym-triazine, or condensate thereof with formaldehyde.

Examples of the amide compounds may include polycarboxylic acid amide such as isophthalic acid diamide, or the like, anthranyl amide, and the like.

Examples of the urea and urea derivative compounds may include N-substituted urea, urea condensates, ethylene urea, hydantoin compounds, ureide compounds, and the like.

Examples of the imidazole compounds may include 1-methylimidazole, 2-methylimidazole, 1,2-dimethylimidazole, 2-phenylimidazole, and the like, and examples of the imide compounds may include succinimide, glutarimide, phthalimide, and the like.

Examples of the polyamide compounds may include polyamide resins such as nylon 46, nylon 6, nylon 66, nylon 610, nylon 612, nylon 12, and the like, and polymers thereof.

Examples of the hydrazide compounds may include aliphatic carboxylic acid hydrazide based compounds such as stearic acid hydrazide, 12-hydroxy stearic acid hydrazide, sebacic acid dihydrazide, dodecanedioic acid dihydrazide, eicosanedioic acid dihydrazide, or the like; an alicyclic carboxylic acid hydrazide based compound such as 1,3-bis(hydrazinocarbonoethyl)-5-isopropyl hydantoin, or the like; an aromatic carboxylic acid hydrazide based compound such as 1-naphthoic acid hydrazide, 2-naphthoic acid hydrazide, isophthalic acid dihydrazide, 2,6-naphthalenedicarboxylic acid dihydrazide, or the like; hetero atom-containing carboxylic acid hydrazide based compound; and the like.

Examples of the formic acid scavengers may include hydroxides of alkali metals or alkali earth metals, inorganic acid salts, carboxylates, or alkoxides. Examples of the formic acid scavengers may include hydroxides of sodium, potassium, magnesium, calcium, barium, or the like, and carbonates, phosphates, silicates, borates, and carboxylates of said metals. Specific examples of saturated or unsaturated aliphatic carboxylate may include calcium dimyristate, calcium dipalmitate, calcium distearate, calcium (myristate-palmitate), calcium (myristate-stearate), calcium (palmitate-stearate), and preferably, calcium dipalmitate or calcium distearate.

The acetal resin composition according to the present invention may further contain the anti-oxidant. As the anti-oxidant, a hindered phenolic compound may be preferably used.

The acetal resin composition according to the present invention may further contain the lubricant. As the lubricant, alkyl acid amide, bis-fatty acid amide, ionic surfactant lubricant, hydrocarbon wax, chlorohydrocarbon, fluorocarbon, oxy-fatty acid, ester, polyalcohol, silicon, or the like, may be preferably used.

The acetal resin composition according to the present invention may further contain the impact modifier. Examples of the impact modifier may include thermoplastic polyurethane, a polyester polyether elastomer, a core-shell acrylate polymer, and the like.

The acetal resin composition according to the present invention may further contain the photostabilizer. Examples of the photostabilizer may include a hindered amine based photostabilizer, a benzotriazole based UV absorber, benzophenone, aromatic benzoate, cyano acrylate, oxalic acid anilide, and the like.

The acetal resin composition according to the present invention may further contain the filler. As the filler, any one or more selected from inorganic fibers for example, glass fiber, carbon fiber, silicon fiber, silica·alumina fiber, zirconium oxide fiber, boron fiber, potassium titanate fiber, fibers of metals such as stainless steel, aluminum, titanium, copper, brass, and the like, potassium titanate whisker having a short fiber length, zinc oxide whisker-, carbon black, carbon nanotube, graphite, silica, quartz powder, glass beads, glass powder, calcium silicate, aluminum silicate, kaolin, clay, diatomite, wollastonite, iron oxide, titanium oxide, alumina, calcium sulfate, magnesium sulfate, barium sulfate, magnesium carbonate, calcium carbonate, silicon carbide, silicon nitride, metal powder, mica, glass piece, metal foil, glass balloon, silica balloon, Shirasu balloon, metal balloon, and the like, may be used. Further, the fillers that are surface-treated, or are not surface-treated may be used without limitation.

The acetal resin composition according to the present invention may further contain the pigment, for example, an inorganic pigment, an organic pigment, a metallic pigment, a fluorescent or luminous pigment, or the like.

The additive may be used in a range in which the additive does not substantially have a negative influence on physical properties of the composition according to the present invention.

Further, the acetal resin composition according to the present invention may further contain barium sulfate. The acetal resin composition contains barium sulfate, which is preferable in that detection characteristics in a detector such as an X-ray as well as metal detection characteristics due to the metal particles may also be improved.

Further, in the acetal resin composition according to the present invention, any one selected from polytetrafluoroethylene, calcium carbonate, wollastonite, and a mixture thereof may be used for friction resistance and wear resistance.

The resin composition according to the present invention may be prepared by a method known in the art. For example, the acetal resin composition may be prepared in a pellet form by simultaneously mixing the ingredients according to the present invention and other additives and then melting extruding the mixture in an extruder.

As an example of a preparation method of the acetal resin composition according to the present invention, a mixture in which polyoxymethylene, the metal particles, and the dispersion improver are mixed may be put into a main feeder of an extruder, be melted, extruded, and then processed. Here, a process of putting the mixture into the main feeder of the extruder and melting the mixture may be performed at 160 to 240°C.

In the preparation method of the acetal resin composition, a kneader such as a single-screw or multi-screw kneading extruder, a roll, a Banbury mixer, or the like, may be used. Preferably, a twin-screw extruder provided with a decompression device and a side feeder may be used.

In the present invention, the preparation method of the acetal resin composition includes melting and kneading the ingredients of the acetal resin composition according to the present invention using the above-mentioned kneader. The melting and kneading method may include a method of simultaneously melting and kneading all ingredients, a method of melting and kneading a preliminarily mixed mixture, or a method of sequentially supplying each of the ingredients or supplying each of the ingredients from the side feeders in the middle of a barrel of the extruder to melt and knead the mixture, but is not necessarily limited thereto.

Here, a decompression degree of the extruder is not limited, but may be preferably 0 to 0.1 MPa. Further, a melting and kneading temperature may be preferably 1 to 100°C higher than a melting point of the acetal resin measured by differential scanning calorimetry (DSC) according to JIS K7121. Preferably, the melting and kneading temperature may be 160 to 240°C. Further, a shear rate of the kneader may be preferably 100 rpm or more, and an average residence time at the time of kneading may be preferably 30 seconds to 1 minute.

A molded product manufactured using the acetal resin composition according to the present invention may be manufactured by an arbitrary method known to those skilled in the art, for example, an extrusion method, an injection molding method, a compression molding method, a blow molding method, a heat molding method, a rotational molding method, or a melting casting method.

Hereinafter, Examples will be provided in order to describe the present invention in more detail. However, the present invention is not limited to the following Examples.

Specifications of each of the ingredients used in the following Examples and Comparative Examples are as follows.

(A) Polyoxymethylene

As polyoxymethylene, KEPITAL F20-03 (1.41 g/cm$^3$, melt index: 9 g/10min (ISO 1133, 190°C /2.16kg), melting point: 165°C, heat deflection temperature (1.8 MPa): 100°C) was used.

(B) Metal Particles

Stainless steel powder 316L (average particle diameter: 65$\mu$m) was used.

(C) Polyolefin Elastomer

An ethene-1-octene copolymer (melt index: 3.0 g/10min (ISO 1133, 190°C/2.16kg), Vicat Softening Point: 85 °C (ASTM D-1525)) was used.

(D) Maleic Anhydride-Modified Polyolefin Elastomer

A maleic anhydride-modified polyolefin elastomer in which 0.75 wt% of maleic anhydride was contained and grafted (melt index: 1.3 g/10min (ISO 1133, 190°C/2.16kg, Density: 0.875 g/cm$^3$ (ISO 1183), glass transition temperature: -53.9°C, softening point: 40°C (ASTM D-1525)) was used.

(E) Ethylene Methyl Acrylate Copolymer (EMA)

EMA containing 24 wt% of methyl acrylate, having a melt index of 20g/10min (ISO 1133, 190°C/2.16kg) and density of 0.944 g/cm$^3$ (ISO 1183) was used.

(F) Ethylene Vinyl Acetate Copolymer (EVA)

EVA containing 28 wt% of vinyl acetate and having a density of 0.950 g/cm$^3$ (ASTM 1505), a softening point of 44°C (ASTM D1525), and a melting temperature (Tm, DSC) of 75°C was used.

(G) Silicon Based Compound

Silicone gum (HR-N) produced by HRS Co., Ltd. was used.

(H) Sterically Hindered Phenolic Compound

SONGNOX 1010 (CAS No.6683-19-8, tetrakis[methylene-3-(3,5-di-tert-butyl-4-hydroxyphenyl)propionate] methane) produced by Songwon Industrial Co., Ltd. was used.

[Example 1]

After preparing a mixture so as to have ingredients and contents illustrated in the following Table 1, the mixture was put into and compounded in a hopper of a twin-screw compounding machine (JSW Co., Ltd. (JAPAN)). A screw rate of the twin-screw compounding machine at a temperature of 160 to 240°C was 180 rpm, and a discharge amount thereof was 16 kg/hr. The resin composition prepared as described above was injected through an injection molding machine (electric injection molding machine (Fanac Co., Ltd.) injection speed: 20 mm/s, injection pressure: 700 kgf, measure: 50 mm, cooling time: 10 sec, mold temperature 80°C), thereby molding a test sample.
Physical properties of the manufactured test sample were measured, and the results were illustrated in the following Table 2.

[Example 2]

A test sample was manufactured by the same method as in Example 1 except for using the maleic anhydride-modified polyolefin based elastomer (D) so as to have ingredients and contents illustrated in the following Table 1 instead of the polyolefin elastomer (C).

[Example 3]

A test sample was manufactured by the same method as in Example 1 except for using the EMA (E) so as to have ingredients and contents illustrated in the following Table 1 instead of the polyolefin elastomer (C).

[Example 4]

A test sample was manufactured by the same method as in Example 1 except for using the EVA (F) so as to have ingredients and contents illustrated in the following Table 1 instead of the polyolefin elastomer (C).

[Example 5]

A test sample was manufactured by the same method as in Example 1 except for using the silicon based compound (G) so as to have contents illustrated in the following Table 1 instead of the polyolefin elastomer (C).

[Example 6]

A test sample was manufactured by the same method as in Example 1 except for further using the sterically hindered phenolic compound so as to have ingredients and contents illustrated in the following Table 1.

[Example 7]

A test sample was manufactured by the same method as in Example 2 except for further using the sterically hindered phenolic compound so as to have ingredients and contents illustrated in the following Table 1.

[Example 8]

A test sample was manufactured by the same method as in Example 3 except for further using the sterically hindered phenolic compound so as to have ingredients and contents illustrated in the following Table 1.

[Example 9]

A test sample was manufactured by the same method as in Example 4 except for further using the sterically hindered phenolic compound so as to have ingredients and contents illustrated in the following Table 1.

[Example 10]

A test sample was manufactured by the same method as in Example 5 except for further using the sterically hindered phenolic compound so as to have ingredients and contents illustrated in the following Table 1.

[Example 11]

A test sample was manufactured by the same method as in Example 1 except for using the polyolefin elastomer (C) and the EMA (E) so as to have ingredients and contents illustrated in the following Table 1.

[Comparative Examples 1 to 3]

Test samples were manufactured by the same method as in Example 1 so as to have ingredients and contents illustrated in the following Table 1.

(Evaluation)

(1) Thermal Stability (VDA275 test)

A molded product having a size of 100 mm x 40 mm x 2 mm was fixed in a 1 L bottle filled with 50 ml of water so as not to contact water, and then sealed. After the bottle installed as described above was kept at 60°C for 3 hours, a content of $CH_2O$ captured in water was analyzed using a UV spectrophotometer, thereby measuring a generation amount of $CH_2O$ of the molded product. The smaller the measured value, the more excellent the thermal stability.

(2) Content of Ash

After 5g of acetal resin pellet was put into a crucible and was burned in an electric arc furnace at 800°C for 3 hours, mass of ash remaining in the crucible was measured, thereby calculating a ratio (%) of the ash to initial mass of the pellet.

(3) Metal Particle Loss rate (SS Loss (%))

(A content of ash/content of metal particles put into a compounding device) X 100 was calculated.

(4) Friction Wear Resistance

After injection molding a through-type test sample having an outer diameter of 25.6 mm, an inner diameter of 20 mm, and a height of 15mm, the test sample was fixed to a tester (a trust type friction and wear tester), and a test was performed under driving conditions at which a pressure load was 6.6 kgf and a linear velocity was 10 cm/s. Here, a dynamic friction coefficient and a specific wear rate were calculated using the following Equation, thereby evaluating friction wear resistance. The smaller the dynamic friction coefficient and the specific wear rate, the more excellent the friction wear resistance (provided that, a test time was 2 hours).

* Dynamic friction coefficient = (frictional force (kgf)x 10cm))/(pressure load (kgf)x1.14cm))

* Specific wear rate = weight loss (mg)/ (density (mg/mm$^3$)× pressure load (kgf)×traveled distance (km))

[Table 1]

| Classification | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 |
|---|---|---|---|---|---|---|---|---|---|---|---|---|---|---|
| (A) Polyoxymethylene (wt%) | 94 | 94 | 94 | 94 | 94 | 94 | 94 | 94 | 94 | 94 | 94 | 96 | 94 | 92 |
| (B) Metal Particle (wt%) | 6 | 6 | 6 | 6 | 6 | 6 | 6 | 6 | 6 | 6 | 6 | 4 | 6 | 8 |
| (C) Polyolefin Elastomer (Parts by Weight) | 1.0 | - | - | - | - | 0.5 | - | - | - | - | 0.5 | - | - | - |
| (D) Maleic Anhydride-Modified Polyolefin Elastomer (Parts by Weight) | - | 1.0 | - | - | - | - | 0.5 | - | - | - | - | - | - | - |
| (E) EMA (Parts by Weight) | - | - | 1.0 | - | - | - | - | 0.5 | - | - | 0.5 | - | - | - |
| (F) EVA (Parts by Weight) | - | - | - | 1.0 | - | - | - | - | 0.5 | - | - | - | - | - |
| (G) Silicon Based Compound | - | - | - | - | 1.0 | - | - | - | - | 0.5 | - | - | - | - |
| (H) Sterically Hindered Phenolic Compound (Parts by Weight) | - | - | - | - | - | 0.2 | 0.2 | 0.2 | 0.2 | 0.2 | - | - | - | - |

[Table 2]

| Classification | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 |
|---|---|---|---|---|---|---|---|---|---|---|---|---|---|---|
| Content (%) of Ash | 5.4 | 5.5 | 5.4 | 5.5 | 5.7 | 5.8 | 5.8 | 5.8 | 5.7 | 5.9 | 5.6 | 2.7 | 4.0 | 5.5 |
| SS Loss (%) | 10 | 8 | 10 | 8 | 5 | 4 | 3 | 3 | 5 | 2 | 7 | 32 | 34 | 31 |
| VDA275 (mg/kg) | 8 | 7 | 9 | 9 | 10 | 6 | 6 | 7 | 7 | 8 | 7 | 9 | 12 | 13 |

[Table 3]

| Classification | Example 1 | Example 3 | Example 4 | Example 5 | Comparative Example 1 | Comparative Example 2 | Comparative Example 3 |
|---|---|---|---|---|---|---|---|
| Specific Wear Rate ($mm^3$/kgf.km) | 0.3 | 1.9 | 1.8 | 0.1 | 3.5 | 3.5 | 3.5 |
| Dynamic Friction Coefficient | 0.21 | 0.31 | 0.30 | 0.12 | 0.40 | 0.40 | 0.40 |

As illustrated in Table 2, it may be confirmed that in Examples 1 to 11 according to the present invention, adhesion between the acetal resin and the metal particles was increased, such that the metal particle loss rate was significantly decreased, and at the same time, thermal stability was improved as compared to Comparative Examples. Further, it may be confirmed that as shown in the specific wear rate and dynamic friction coefficient values of Table 3, in Examples 1 to 5 according to the present invention, friction wear resistance was significantly improved as compared to Comparative Examples.

Hereinabove, although the present invention is described by the exemplary embodiments, they are provided only for assisting in the entire understanding of the present invention. Therefore, the present invention is not limited to the exemplary embodiments. Various modifications and changes may be made by those skilled in the art to which the present invention pertains from this description.

**Claims**

1. An acetal resin composition comprising:

   (a) polyoxymethylene;
   (b) metal particles; and
   (c) at least one dispersion improvers selected from polyolefin based compounds and silicon based compounds.

2. The acetal resin composition of claim 1, wherein the acetal resin composition contains 70 to 99 wt% of the polyoxymethylene (a), 0.5 to 20 wt% of the metal particles (b), and 0.05 to 10 wt% of at least one dispersion improvers (c) selected from the polyolefin based compounds and the silicon based compounds.

3. The acetal resin composition of claim 1, wherein the polyolefin based compound includes maleic anhydride-modified polyolefin based resins in which maleic anhydride is grafted onto at least one polyolefin based resins selected from a polyolefin elastomer, ethylene vinyl acetate, ethylene alkyl acrylate, linear low-density polyethylene, and high-density polyethylene.

4. The acetal resin composition of claim 3, wherein the maleic anhydride is contained in a content of 0.1 to 10 wt% based on a total weight of the maleic anhydride-modified polyolefin based resin.

5. The acetal resin composition of claim 1, wherein the metal particles have an average particle diameter of 0.1 to 10,000 μm.

6. The acetal resin composition of claim 1, further comprising barium sulfate.

7. The acetal resin composition of claim 1, further comprising a sterically hindered phenolic compound.

8. The acetal resin composition of claim 1, further comprising any one or a mixture of two or more selected from the group consisting of an antioxidant, a formaldehyde or formic acid removing agent, a thermal stabilizer, a lubricant, an impact modifier, an antibiotic, a processing aid, a filler, a colorant, a release agent, an antistatic agent, a flame retardant, a reinforcing agent, a photostabilizer, a pigment, an anti-friction agent, and an anti-wear agent.

9. A molded product comprising the acetal resin composition of any one of claims 1 to 8.

**Patentansprüche**

1. Acetalharzzusammensetzung, umfassend:

   (a) Polyoxymethylen,
   (b) Metallpartikel und
   (c) mindestens ein Dispergiermittel ausgewählt aus Verbindungen auf Polyolefinbasis und Verbindungen auf Siliciumbasis.

2. Acetalharzzusammensetzung nach Anspruch 1, wobei die Acetalharzzusammensetzung 70 bis 99 Gew.-% Polyoxymethylen (a), 0,5 bis 20 Gew.-% Metallpartikel (b) und 0,05 bis 10 Gew.-% mindestens eines Dispergiermittels (c), ausgewählt aus den Verbindungen auf Polyolefinbasis und den Verbindungen auf Siliciumbasis, enthält.

3. Acetalharzzusammensetzung nach Anspruch 1, wobei die Verbindung auf Polyolefinbasis Harze auf Basis von maleinsäureanhydridmodifizierten Polyolefinen einschließt, bei denen das Maleinsäureanhydrid auf mindestens ein aus einem Polyolefinelastomer, Ethylenvinylacetat, Ethylenalkylacrylat, geradkettigem Polyethylen niederer Dichte und Polyethylen hoher Dichte ausgewähltes Harz auf Polyolefinbasis gepropft ist.

4. Acetalharzzusammensetzung nach Anspruch 3, welche das Maleinsäureanhydrid in einem Gehalt von 0,1 bis 10 Gew.-%, bezogen auf das Gesamtgewicht des Harzes auf Basis von maleinsäureanhydridmodifiziertem Polyolefin, enthält.

5. Acetalharzzusammensetzung nach Anspruch 1, wobei die Metallpartikel einen durchschnittlichen Teilchendurchmesser von 0,1 bis 10 000 $\mu$m aufweisen.

6. Acetalharzzusammensetzung nach Anspruch 1, welche weiterhin Bariumsulfat umfasst.

7. Acetalharzzusammensetzung nach Anspruch 1, welche weiterhin eine sterisch gehinderte phenolische Verbindung umfasst.

8. Acetalharzzusammensetzung nach Anspruch 1, welche weiterhin eine beliebige oder eine Mischung von zwei oder mehr Komponenten, ausgewählt aus der Gruppe bestehend aus einem Antioxidationsmittel, einem formaldehyd- oder ameisensäureentfernenden Mittel, einem thermischen Stabilisator, einem Schmiermittel, einem Schlagzähmodifikator, einem Antibiotikum, einer Verarbeitungshilfe, einem Füllstoff, einem Farbstoff, einem Freisetzungsmittel, einem antistatischen Mittel, einem Flammschutzmittel, einem Verstärkungsmittel, einem Fotostabilisator, einem Pigment, einem reibungsvermindernden Mittel und einem abnutzungsvermindernden Mittel, umfasst.

9. Formprodukt, umfassend die Acetalharzzusammensetzung nach einem der Ansprüche 1 bis 8.

**Revendications**

1. Composition de résine acétal comprenant :

   (a) du polyoxyméthylène ;
   (b) des particules métalliques ; et
   (c) au moins un adjuvant de dispersion choisi parmi des composés à base de polyoléfine et des composés à base de silicium.

2. Composition de résine acétal selon la revendication 1, la composition de résine acétal contenant 70 à 99 % en poids du polyoxyméthylène (a), 0,5 à 20 % en poids des particules métalliques (b), et 0,05 à 10 % en poids d'au moins un adjuvant de dispersion (c) choisi parmi les composés à base de polyoléfine et les composés à base de silicium.

3. Composition de résine acétal selon la revendication 1, dans laquelle le composé à base de polyoléfine comprend des résines à base de polyoléfine modifiées par l'anhydride maléique dans lesquelles l'anhydride maléique est greffé sur au moins une résine à base de polyoléfine choisie parmi un élastomère de polyoléfine, éthylène-acétate de vinyle, éthylène-acrylate d'alkyle, un polyéthylène basse densité linéaire et un polyéthylène haute densité.

**4.** Composition de résine acétal selon la revendication 3, dans laquelle l'anhydride maléique est contenu à une teneur de 0,1 à 10 % en poids sur la base d'un poids total de la résine à base de polyoléfine modifiée par anhydride maléique.

**5.** Composition de résine acétal selon la revendication 1, dans laquelle les particules métalliques ont un diamètre de particule moyen de 0,1 à 10 000 $\mu$m.

**6.** Composition de résine acétal selon la revendication 1, comprenant en outre du sulfate de baryum.

**7.** Composition de résine acétal selon la revendication 1, comprenant en outre un composé phénolique stériquement encombré.

**8.** Composition de résine acétal selon la revendication 1, comprenant en outre l'un quelconque ou un mélange de deux ou plus choisis dans le groupe constitué d'un antioxydant, un agent de retrait de formaldéhyde ou d'acide formique, un stabilisant thermique, un lubrifiant, un modificateur de résistance aux chocs, un antibiotique, un adjuvant de traitement, une charge, un colorant, un agent de démoulage, un agent antistatique, un agent ignifuge, un agent de renforcement, un photostabilisant, un pigment, un agent antifriction et un agent antiusure.

**9.** Produit moulé comprenant la composition de résine acétal selon l'une quelconque des revendications 1 à 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6113482 A

- US 6177113 A

**Non-patent literature cited in the description**

- *CHEMICAL ABSTRACTS,* 6683-19-8